# EUROPÄISCHE PATENTSCHRIFT

(11) **EP 0 718 518 B1**
(45) Veröffentlichungstag und Bekanntmachung des Hinweises auf die Patenterteilung: **04.02.1998**
(21) Anmeldenummer: 95119109.7
(22) Anmeldetag: 05.12.1995
(51) Int. Cl.: F16D 13/68, F16D 3/68

(54) **Kupplung**
Coupling
Accouplement

(30) Priorität: 19.12.1994 DE 4445257
(43) Veröffentlichungstag der Anmeldung: 26.06.1996
(73) Patentinhaber: Patentverwertungsgesellschaft Rohs Voigt mbH, 52351 Düren (DE)
(72) Erfinder: Rohs, Ulrich, Dr. Ing., 52351 Düren (DE)
(74) Vertreter: Castell, Klaus, Dr.-Ing.

(56) Entgegenhaltungen:
- CH-A- 645 959
- GB-A- 303 656
- US-A- 2 964 930
- US-A- 4 156 481

## Beschreibung

Die Erfindung betrifft eine Kupplung nach dem Oberbegriff des Patentanspruches 1.

Neben der Verbindung des Motors mit den Antriebsrädern hat eine Kupplung eines Kraftfahrzeuges die weitere Aufgabe, die durch die Ungleichförmigkeit des Motorenlaufes erregten Drehschwingungen im Antriebsstrang zu vermindern.

Derartige Drehschwingungen können Festigkeitsprobleme schaffen, durch Getrieberasseln, Lastwechselschwingungen oder Karosseriedröhnen unerwünschte Geräusche entwickeln und den Fahrkomfort beeinträchtigen.

Ein wesentlicher Teil dieser Erscheinungen wird durch bekannte Kupplungen bereits aufgefangen, doch bleibt es immer noch problematisch, unerwünschte Schlaggeräusche zu unterdrücken, wenn aus dem Leerlauf in die Übertragung eines Drehmomentes gewechselt wird oder bei anderen Lastwechselsituationen. Der Dämpfungsbereich der bekannten Kupplungen reicht nicht über den gesamten Last- und Lastwechselbereich, d.h. zwischen der Übertragung von ganz kleinen und ganz großen Kräften.

Um gerade die bei Lastwechseln im Leerlaufbereich auftretenden, von sehr kleinen Kräften herrührenden Geräusche zu vermeiden, wurden bei bekannten Kupplungen, wie sie z.B. bei Personenkraftwagen allgemein üblich sind, Kupplungen mit tangentialen Torsionsfedern als Innendämpfer entwickelt.

Hierzu gehören beispielsweise Gummifedern, wie sie in den US-PS 29 64 930 oder 41 56 481 beschrieben sind. Um sie vor Beschädigungen von außen zu schützen, sind sie jeweils gegenüber einem auf die Gummifeder wirkenden Kolben in einem Zylinder untergebracht. Dabei ist darauf Bedacht genommen, daß die Gummikörper lediglich als Gummifeder wirken und folglich genügend Raum haben, um bei einer Druckbelastung ausweichen zu können. Dies erfolgt entweder durch eine zentrale Bohrung oder durch eine mittlere Einschnürung des Gummikörpers. Hierbei ergibt sich in der letzten Phase der Kompression des Gummikörpers zwar eine stärkere Kraftaufnahme, doch ist diese keineswegs ausreichend, weil sie die Aufgabe, bei kleinen Kräften eine kleine Dämpfung und bei großen Kräften eine sehr große Dämpfung zu entwickeln, nicht ausreichend erfüllen und bei großer Dämpfung mit den Drehschwingungen in Resonanz geraten können.

Der Erfindung liegt die Aufgabe zugrunde, die bekannten Schläge mit möglichst einfachen Mitteln zu vermeiden.

Die Lösung der gestellten Aufgabe besteht gemäß der Erfindung in den kennzeichnenden Merkmalen des Anspruches 1. Sie sind ergänzt durch Maßnahmen, die in den Unteransprüchen angegeben sind.

Die erfindungsgemäßen Spannkörper benutzen den zylindrischen Körper als hydraulische Flüssigkeit, die sich bei axialer Verformung voll gegen die Innenwandung des Zylinders anpreßt. Die Belastung kann dabei um ca. das Zehnfache der möglichen Belastung mit Federkörpern erhöht werden. Es wird eine zunächst fast lineare und dann eine stark progressive Federung erzielt, die zur kraftschlüssigen Kupplung der Schleppscheibe mit der Mitnehmerscheibe führt.

In der Zeichnung ist die Erfindung an Ausführungsbeispielen näher erläutert. Es zeigen:
- Fig.1: einen Sekundärteil der erfindungsgemäßen Kupplung im axialen Querschnitt nach der Linie I-I in Fig.2,
- Fig.2: eine Draufsicht auf den Sekundärteil,
- Fig.3: einen Spannkörper in entlastetem Zustand im Längsschnitt,
- Fig.4: einen Spannkörper in belastetem Zustand im Längsschnitt,
- Fig.5: eine Schleppscheibe einer erfindungsgemäßen Kupplung mit Spannkörpern und Federelementen,
- Fig.6: eine Kupplung mit schubbelasteten Spannkörpern und Federelementen und
- Fig.7: eine Kupplung mit zugbelasteten Spannkörpern und Federelementen.

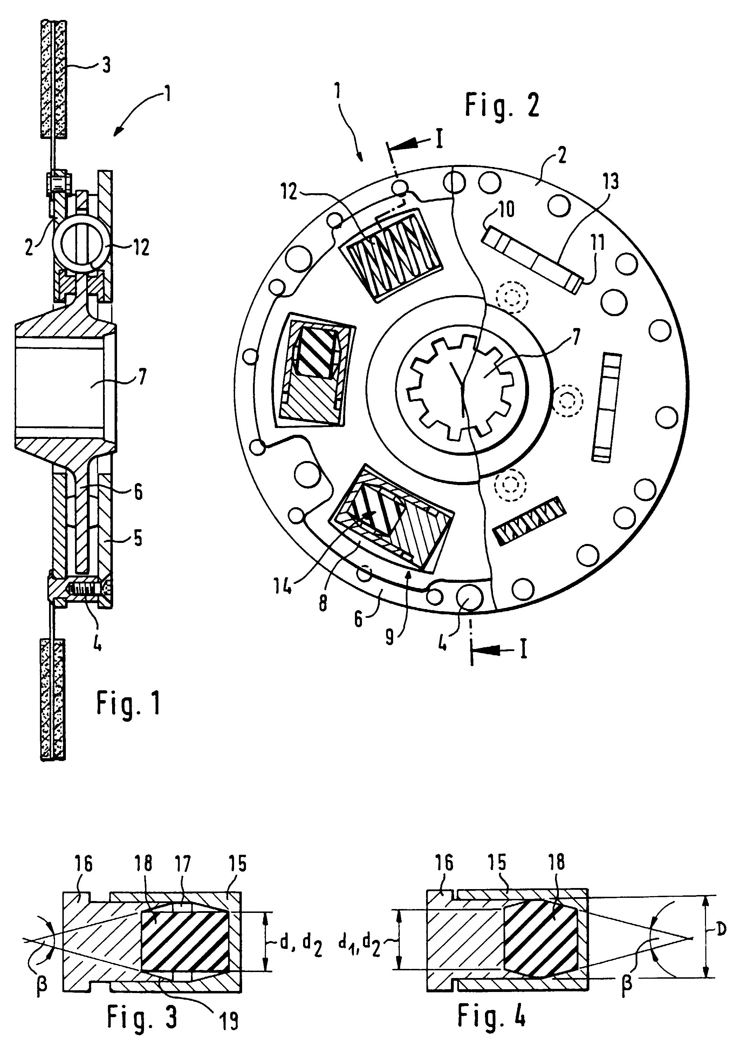

Die Fig.1 und 2 zeigen den Sekundärteil 1 einer erfindungsgemäßen Kupplung, im wesentlichen bestehend aus einer Mitnehmerscheibe 2, die an ihrem Außenumfang Reibbeläge 3 trägt, an der die Kupplungsflanschen eines zweiteiligen, nicht dargestellten Primärteiles beiderseits zangenförmig anzugreifen vermögen.

Die Mitnehmerscheibe 2 ist mittels Nieten oder Schrauben fest mit einem Flansch 5 verbunden. Zwischen diesem Flansch 5 und der Mitnehmerscheibe 2 ist, hierzu relativ verdrehbar; eine Schleppscheibe 6 auf einer Abtriebswelle 7 befestigt. Die Schleppscheibe 6 weist, regelmäßig oder unregelmäßig über ihren Umfang verteilt, käfigartige Ausnehmungen 8 zur Aufnahme von tangentialen Federkörpern 9 auf, die sich an entsprechenden, radialen Kanten 10,11 von Ausnehmungen 13 der Mitnehmerscheibe 2 und des Flansches 5 abzustützen vermögen und relativ zur Mitnehmerscheibe 2 und dem Flansch 5 bewegbar und zusammendrückbar sind. Dabei erstrecken sich die Ausnehmungen 13 in der Mitnehmerscheibe 2 und im Flansch 5 in Umfangsrichtung über einen weiteren Winkelbereich als die Ausnehmungen 8 in der Schleppscheibe 6.

Diese Federkörper 9 können in bekannter Weise als Federelemente in der Form von Torsionsdruckfedern 12 ausgebildet sein, die in der käfigartigen Ausnehmung 8 der Schleppscheibe 6 eingesetzt sind und in die Ausnehmungen 13 der Mitnehmerscheibe 2 ragen.

Alle oder ein Teil der Federkörper 9 können aber auch als erfindungsgemäße Spannkörper 14 ausgebildet sein, wie sie in den Fig.3 und 4 in entlastetem bzw. belastetem Zustand dargestellt sind.

Jeder Spannkörper 14 besteht aus einem Zylinder 15 und einem Kolben 16. Der zwischen Zylinder 15 und Kolben 16 eingeschlossene Hohlraum 17 ist mit einem im Ruhezustand zylindrischen Körper 18 aus elastoplastischen Werkstoff, z.B. Gummi, gefüllt. Die Bohrung des Zylinders 15 ist zu seinem Boden hin konisch verjüngt und weist dort eine Durchmesser d₂ auf, der demjenigen d des zylindrischen Körpers 18 gleich ist.

Der Kolben 16 weist eine konische Einsenkung 19 mit einem Öffnungswinkel β von etwa 20° auf, deren Grunddurchmesser d₁ demjenigen d des zylindrischen Körpers 18 gleich ist. Vorteilhaft besteht der Kolben 16 aus einem Werkstoff, dessen Elastizitätsmodul kleiner ist, als derjenige des Zylinders 15, z.B. aus Kunststoff.

Beim Zusammendrücken des zylindrischen Körpers 18 wird die durch die Einsenkung 19 gebildete Randlippe des Kolbens 16 fest gegen die Innenwandung des Zylinders 15 gedrückt und dient dort als Dichtung. Gleichzeitig wirkt der zylindrische Körper 15 wie eine hydraulische Flüssigkeit und verformt sich, wie Fig.4 zeigt, tonnenförmig. Auf diese Weise lassen sich sehr große Kräfte übertragen.

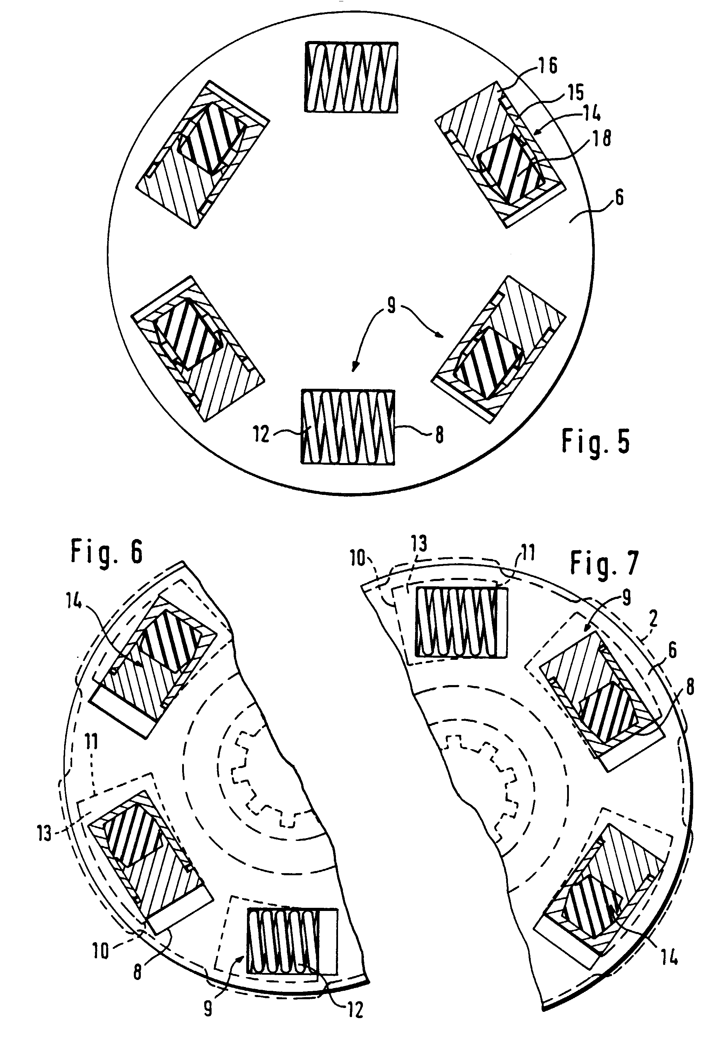

Fig.5 zeigt eine Schleppscheibe 6 einer Kupplung mit abwechselnd als Torsionsfeder 12 und Spannkörper 14 ausgebildeten Federkörpern 9. Hierdurch läßt sich eine modifizierte Kennlinie erreichen. Die Kennlinie hängt ferner von den Durchmessern d und D des zylindrischen Körpers 18 und des Zylinders 15 der Spannkörper 14 ab.

Die Fig.6 und 7 zeigen eine erfindungsgemäße Kupplung jeweils bei Zug- und Schubbelastung. Bei Zugbelastung greift die in Drehrichtung rückwärtige Kante 10 jeder Ausnehmung 13 der Mitnehmerscheibe 2 am rückwärtigen Ende des Kolbens 16 oder der Torsionsfeder 12 an und drückt den zylindrischen Körper 18 zusammen bis dieser die Relativbewegung von Kolben 16 und Zylinder 15 beendet.

Im Fall der Schubbelastung greift die vordere radiale Kante 11 jeder Ausnehmung 13 der Mitnehmerscheibe 2 und des Flansches 5 an der Vorderseite der jeweiligen Federkörper 9 an.

Die erfindungsgemäße Kupplung eignet sich insbesondere für Drehschwingungsdämpfer, gedämpfte Reibscheiben bei Kupplungen und Kupplungen zur Verbindung zweier Wellen bei elastischer Kupplung.

## Patentansprüche

1. Kupplung zur Verbindung koaxialer, umlaufender Wellen, bestehend aus einem Primärteil und einem mit diesem verbindbaren Sekundärteil (1), wobei das Sekundärteil (1) aus einer mit dem Primärteil kuppelbaren Mitnehmerscheibe (2) und einer gegenüber der Mitnehmerscheibe (2) relativ verdrehbaren und mit der abgetriebenen Welle fest verbundenen Schleppscheibe (6) besteht, die mittels tangentialer Federkörper (9) kraftschlüssig mit der Mitnehmerscheibe (2) in Eingriff steht, wobei mindestens ein Federkörper (9) ein Spannkörper (14) ist, der in einer Ausnehmung (8) der Schleppscheibe (6) eingesetzt ist und an die radialen Kanten (10 bzw.11) einer Ausnehmung (13) in der Mitnehmerscheibe (2) anzustoßen vermag und wobei jeder Spannkörper (14) aus jeweils einem Zylinder (15) und einem Kolben (16) besteht, wobei der zwischen Zylinder (15) und Kolben (16) eingeschlossene Hohlraum (17) mit einem zylindrischen Körper (18) aus elastoplastischem Werkstoff gefüllt ist, dessen Durchmesser (d) kleiner ist, als der Innendurchmesser (D) des Zylinders (15).
**dadurch gekennzeichnet**,
daß jeder zylindrische Körper (18) eines Spannkörpers (14) so bemessen ist, daß er nach einem anfänglichen, geringen Weg des Kolbens (16) den Hohlraum (17) völlig ausfüllt und weitere axiale Kräfte als inkompressibles Medium aufzunehemen vermag.

2. Kupplung nach Anspruch 1, **dadurch gekennzeichnet**, daß der Kolben (16) des Spannkörpers (14) an seiner Stirnseite eine konische Einsenkung (19) aufweist, deren Grunddurchmesser (d₁) dem Durchmesser (d) des zylindrischen Körpers (18) entspricht und deren großer Durchmesser um ein Geringes kleiner ist, als der Innendurchmesser (D) des Zylinders (15).

3. Kupplung nach Anspruch 1 oder 2, **dadurch gekennzeichnet**, daß der Hohlraum (17) im Zylinder (15) jedes Spannkörpers (14) zu dessen Boden hin sich konisch bis auf einen Durchmesser (d₂) verjüngt, der dem Durchmesser (d) des zylindrischen Körpers (18) gleich ist.

4. Kupplung nach Anspruch 2 oder 3, **dadurch gekennzeichnet**, daß der Kegelwinkel (β) der Verjüngung ca. 20° beträgt.

5. Kupplung nach einem der Ansprüche 1 bis 4, **dadurch gekennzeichnet**, daß der zylindrische Körper (18) aus Gummi besteht.

6. Kupplung nach einem der Ansprüche 1 bis 4, **dadurch gekennzeichnet**, daß das Verhältnis zwischen dem Durchmesser (d) des zylindrischen Körpers (18) und dem Innendurchmesser (D) des Zylinders (15) ein Maß für die gewünschte Federkennlinie ist.

7. Kupplung nach einem der Ansprüche 1 bis 6, **dadurch gekennzeichnet**, daß der Kolben (16) des Spannkörpers (14) aus einem Werkstoff besteht, dessen Elastizitätsmodul kleiner ist als derjenige des Zylinders (15).

8. Kupplung nach Anspruch 7, **dadurch gekennzeichnet**, daß der Kolben (16) aus Kunststoff besteht.

9. Kupplung nach einem der Ansprüche 1 bis 8, **dadurch** **gekennzeichnet**, daß die Hälfte der Federkörper (9) aus Spannkörpern (14) besteht.

10. Kupplung nach einem der Ansprüche 1 bis 9, **dadurch gekennzeichnet**, daß die Spannkörper (14) und etwaige übrigen Federkörper (9) so eingebaut sind, daß sie bei ungleichen Drehwinkeln in Eingriff mit der Mitnehmerscheibe (2) kommen.

## Claims

1. A clutch for the connection of coaxial rotating shafts, consisting of a primary part and a secondary part (1) adapted to be connected thereto, the secondary part (1) consisting of a drive plate (2) which can be coupled to the primary part and, rotatable in relation to the drive plate (2) and rigidly connected to the output shaft, a driven plate (6) which, by means of tangential spring members (9), is in force-locking engagement with the drive plate (2), whereby at least one spring member (9) is a tensioning member (14) which is inserted into a recess (8) in the driven plate (6) and is capable of abutting the radial edges (10, 11) of a recess (13) in the drive plate (2) and whereby each tensioning member (4) consists of in each case one cylinder (15) and one piston (16), whereby the cavity formed between cylinder (15) and piston (16) is filled with a cylindrical body (18) of elastoplastic material, the diameter (D) of which is smaller than the inside diameter (D) of the cylinder (15), characterised in that each cylindrical body (18) of a tensioning member (14) is so dimensioned that after an initial minimal travel of the piston (16) completely fills the cavity (17) and is capable of accommodating further axial forces as an incompressible medium.

2. A clutch according to claim 1, characterised in that the piston (16) of the tensioning member (14) has on its end face a conical depression (19) the base diameter (d₁) of which corresponds to the diameter (d) of the cylindrical body (18) while its large diameter is minimally smaller than the inside diameter (D) of the cylinder (15).

3. A clutch according to claim 1 or 2, characterised in that the cavity (17) in the cylinder (15) of each tensioning body (14) tapers conically towards its bottom down to a diameter (d₂) which is equal to the diameter (d) of the cylindrical body (18).

4. A clutch according to claim 2 or 3, characterised in that the cone angle (8) of the taper amounts to approx. 20°.

5. A clutch according to one of claims 1 to 4, characterised in that the cylindrical body (18) consists of rubber.

6. A clutch according to one of claims 1 to 4, characterised in that the ratio of the diameter (d) of the cylindrical body (18) to the inside diameter (D) of the cylinder (15) is a measure of the desired spring characteristic.

7. A clutch according to one of claims 1 to 6, characterised in that the piston (16) of the tensioning body (14) consists of a material the elasticity modulus of which is smaller than that of the cylinder (15).

8. A clutch according to claim 7, characterised in that the piston (16) consists of synthetic plastics material.

9. A clutch according to one of claims 1 to 8, characterised in that half the spring body (9) consists of tensioning members (14).

10. A clutch according to one of claims 1 to 9, characterised in that the tensioning members (14) and any other spring bodies (9) are so incorporated that in the event of unequal angles of rotation, they come into engagement with the drive plate (2).

## Revendications

1. Dispositif d'accouplement destiné à la jonction d'arbres rotatifs coaxiaux, comprenant une partie primaire et une partie secondaire (1) qui peut être reliée à celle-ci, sur lequel la partie secondaire (1) se compose d'un disque d'entraînement (2) susceptible d'être couplé à la partie primaire et d'un disque traîné (6), lequel peut relativement tourner par rapport au disque d'entraînement (2), est fixé sur l'arbre de sortie et est en prise dans le disque d'entraînement (2) sous l'influence d'éléments ressorts (9) tangentiels, un élément ressort (9) au moins étant un élément tendeur (14) logé dans un évidement (8) du disque traîné (6) et pouvant s'appuyer sur les bords radiaux (10 ou 11) d'un évidement (13) du disque d'entraînement (2), et sur lequel chaque élément tendeur (14) comprend un cylindre (15) et un piston (16), un corps cylindrique (18) en matière élastoplastique dont le diamètre (d) est inférieur au diamètre intérieur (D) du cylindre (15) remplissant l'espace vide (17) qu'entourent le cylindre (15) et le piston (16), **caractérisé en ce** que les dimensions de chaque corps cylindrique (18) situé sur un élément tendeur (14) sont calculées de manière à ce qu'au bout d'une brève amorce de course du piston (16), chaque corps cylindrique (18) remplisse complètement l'espace vide (17) et soit susceptible d'absorber comme fluide incompressible d'autres forces axiales.

2. Dispositif d'accouplement selon la revendication 1 **caractérisé en ce** que le front du piston (16) de l'élément tendeur (14) présente une creusure (19) conique dont le diamètre de fond (d₁) est équivalent au diamètre (d) du corps cylindrique (18) et dont le grand diamètre est à peine inférieur au diamètre intérieur (D) du cylindre (15).

3. Dispositif d'accouplement selon la revendication 1 ou 2 **caractérisé en ce** que l'espace vide (17) dans le cylindre (15) de chaque élément tendeur (14) s'amincit de façon conique en direction du fond de celui-ci jusqu'à atteindre un diamètre (d₂) qui est égal au diamètre (d) du corps cylindrique (18).

4. Dispositif d'accouplement selon la revendication 2 ou 3 **caractérisé en ce** que l'angle de cône (β) de l'effilement est d'environ 20°.

5. Dispositif d'accouplement selon l'une des revendications 1 à 4 **caractérisé en ce** que le corps cylindrique (18) est en caoutchouc.

6. Dispositif d'accouplement selon l'une des revendications 1 à 4 **caractérisé en ce** que le rapport entre le diamètre (d) du corps cylindrique (18) et le diamètre intérieur (D) du cylindre (15) est une grandeur servant à déterminer la courbe caractéristique des ressorts voulue.

7. Dispositif d'accouplement selon l'une des revendications 1 à 6 **caractérisé en ce** que le piston (16) de l'élément tendeur (14) est réalisé dans un matériau dont le module d'élasticité est inférieur à celui du cylindre (15).

8. Dispositif d'accouplement selon la revendication 7 **caractérisé en ce** que le piston (16) est en matière plastique.

9. Dispositif d'accouplement selon l'une des revendications 1 à 8 **caractérisé en ce** que la moitié des éléments ressorts (9) sont des éléments tendeurs (14).

10. Dispositif d'accouplement selon l'une des revendications 1 à 9 **caractérisé en ce** que les éléments tendeurs (14) et les autres éléments ressorts (9) éventuels sont montés de manière à être en prise dans le disque d'entraînement (2) pour des écarts angulaires inégaux.
